(19) Europäisches Patentamt / European Patent Office / Office européen des brevets

(11) **EP 4 287 305 A1**

(12) **EUROPEAN PATENT APPLICATION**
published in accordance with Art. 153(4) EPC

(43) Date of publication:
06.12.2023 Bulletin 2023/49

(21) Application number: 22746086.2

(22) Date of filing: 01.02.2022

(51) International Patent Classification (IPC):
*H01M 4/133* (2010.01)    *H01M 4/139* (2010.01)
*H01M 4/587* (2010.01)

(52) Cooperative Patent Classification (CPC):
**H01M 4/133; H01M 4/139; H01M 4/587;**
Y02E 60/10

(86) International application number:
**PCT/JP2022/003834**

(87) International publication number:
**WO 2022/163867 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 01.02.2021 PCT/JP2021/003589

(71) Applicant: Resonac Corporation
**Tokyo 105-8518 (JP)**

(72) Inventors:
• KUBOTA, Takashi
  Tokyo 100-6606 (JP)
• MATSUMOTO, Yoshiyuki
  Tokyo 100-6606 (JP)
• SHIMOYAMA, Takehiro
  Tokyo 100-6606 (JP)
• UCHIYAMA, Yoshinori
  Tokyo 100-6606 (JP)

(74) Representative: **Berggren Oy**
**P.O. Box 16**
**Eteläinen Rautatiekatu 10A**
**00101 Helsinki (FI)**

(54) **NEGATIVE ELECTRODE MATERIAL FOR LITHIUM-ION SECONDARY BATTERY, EVALUATION METHOD THEREFOR, MANUFACTURING METHOD THEREFOR, NEGATIVE ELECTRODE FOR LITHIUM-ION SECONDARY BATTERY, AND LITHIUM-ION SECONDARY BATTERY**

(57)     A negative electrode material for a lithium-ion secondary battery includes graphite particles satisfying the following Formula (1):

$$[\text{Springback rate} \times 7.6] + [\text{Compressive load (kN/cm}^2)] \geq 4.2 \cdots (1).$$

EP 4 287 305 A1

**Description**

Technical Fields

The present disclosure relates to a negative electrode material for a lithium-ion secondary battery, a method of evaluating the same, and a method of producing the same, a negative electrode for a lithium-ion secondary battery, and a lithium-ion secondary battery.

Background Art

Lithium-ion secondary batteries have been widely used in electronic devices such as laptop personal computers (PCs), mobile phones, smartphones, and tablet PCs by virtue of their properties such as small size, light weight, and high energy density. In the background of recent environmental issues such as global worming caused by $CO_2$ emissions, electric vehicles such as clean electric vehicles (EVs) that run only on batteries, hybrid electric vehicles (HEVs) that utilize gasoline engines and batteries in combination, and plug-in hybrid electric vehicles (PHEVs) have become widespread, and lithium-ion secondary batteries (in-vehicle lithium-ion secondary batteries) as batteries mounted on these vehicles has developed.

Input characteristics of lithium-ion secondary batteries are greatly influenced by the performance of negative electrode materials for the lithium-ion secondary batteries. As materials for negative electrode materials for lithium-ion secondary batteries, carbon materials are widely used. For example, as materials for obtaining a high-density negative electrode, carbon materials having a high degree of crystallinity, such as artificial graphite and spherical natural graphite obtained by spheroidizing natural vein graphite, have been proposed.

As for the artificial graphite, for example, Patent Document 1 discloses a negative electrode material for a lithium-ion secondary battery including composite particles, each of the composite particles including spherical graphite particles and a plurality of flat graphite particles that are gathered or bound together such that the flat graphite particles have non-parallel orientation planes. Further, Patent Document 2 discloses a negative electrode active material for a lithium-ion secondary battery including carbon powder particles, each particles having a form in which plate-shaped particles are oriented in the direction of the planes and are stacked to be assembled in a primarily stable structure, and having fine pores formed on the surface thereof.

Citation List

Patent Documents

[Patent Document 1] International Publication No. 2015/147012
[Patent Document 2] Japanese Patent Application Laid-Open (JP-A) No. 2005-302725

SUMMARY OF INVENTION

Technical Problem

In a lithium-ion secondary battery, voids between active material particles disappear in the process of repeated charging and discharging, and portions where an electrolyte cannot contact the active material will be generated. As a result, deterioration in cycle characteristics such as cycle capacity retention rate due to increased cell resistance becomes a problem.

In view of the foregoing circumstances, the present disclosure is directed to providing a negative electrode material capable of producing a lithium-ion secondary battery excellent in cycle characteristics, a method of evaluating the same and a method of producing the same, and a negative electrode for a lithium-ion secondary battery and a lithium-ion secondary battery that are produced by using the negative electrode material. Solution to Problem

Means for solving the above problems include the following aspects.

<1> A negative electrode material for a lithium-ion secondary battery comprising graphite articles satisfying the following Formula (1):

$$[\text{Springback rate} \times 7.6] + [\text{Compressive load (kN/cm}^2)] \geq 4.2 \cdots (1).$$

<2> The negative electrode material for a lithium-ion secondary battery according to <1>, wherein the compressive load of the graphite particles is 2.0 kN/cm$^2$ or more.

<3> The negative electrode material for a lithium-ion secondary battery according to <1> or <2>, wherein the springback rate of the graphite particles is 0.25 or more.

<4> The negative electrode material for a lithium-ion secondary battery according to any one of <1> to <3>, wherein the graphite particles comprises composite particles having a structure in which a plurality of flat graphite particles are stacked.

<5> A method of evaluating a negative electrode material for a lithium-ion secondary battery comprising, evaluating a negative electrode material for a lithium-ion secondary battery using a regression formula obtained by multiple regression analysis with a springback rate of graphite particles included in the negative electrode material for a lithium-ion secondary battery and a compressive load (kN/cm$^2$) of the graphite particles as explanatory variables and a liquid absorption time of a negative electrode including the negative electrode material for a lithium-ion secondary battery as an objective variable.

<6> A method of producing a negative electrode material for a lithium-ion secondary battery comprising producing a negative electrode material for a lithium-ion secondary battery based on an evaluation result of a negative electrode material for a lithium-ion secondary battery using the evaluation method of a negative electrode material for a lithium-ion secondary battery according to <5>.

<7> A method of producing a negative electrode material for a lithium-ion secondary battery comprising producing the negative electrode material for a lithium-ion secondary battery according to any one of <1> to <4>, wherein the method comprises a step of graphitizing coke.

<8> The method of producing a negative electrode material for a lithium-ion secondary battery according to <7>, wherein the coke has a thermal expansion coefficient after firing at 1400°C of 2.30 $\times$ 10$^{-6}$/°C or more.

<9> A negative electrode for a lithium-ion secondary battery, comprising: a negative electrode material layer comprising the negative electrode material for a lithium-ion secondary battery according to any one of <1> to <4>, and a current collector.

<10> A lithium-ion secondary battery, comprising: the negative electrode for a lithium-ion secondary battery according to claim 7, a positive electrode; and an electrolytic solution.

Advantageous Effects of Invention

The present disclosure provides a negative electrode material capable of producing a lithium-ion secondary battery excellent in cycle characteristics, a method of evaluating the same and a method of producing the same, and a negative electrode for a lithium-ion secondary battery and a lithium-ion secondary battery that are produced by using the negative electrode material.

DESCRIPTION OF EMBODIMENTS

Embodiments for carrying out the invention will be described below in detail. However, the invention is not limited to the following embodiments. In the following embodiments, components (including elemental steps, etc.) thereof are not essential unless otherwise specified. The same applies to numerical values and ranges, which do not limit the invention.

In the present disclosure, the term "step (process)" encompasses an independent step separated from other steps as well as a step that is not clearly separated from other steps, as long as a purpose of the step can be achieved.

In the present disclosure, a numerical range specified using "(from) ... to ..." represents a range including the numerical values noted before and after "to" as a minimum value and a maximum value, respectively.

In the numerical ranges described in a stepwise manner in the present disclosure, the upper limit value or the lower limit value described in one numerical range may be replaced with the upper limit value or the lower limit value of another numerical range described in a stepwise manner. Further, in the numerical ranges described in the present disclosure, the upper limit value or the lower limit value of the numerical ranges may be replaced with the values shown in the Examples.

In the present disclosure, each component may include plural substances corresponding to the component. In the case in which plural substances corresponding to a component are present in a composition, the amount or content of the component in the composition means the total amount or content of the plural substances present in the composition unless otherwise specified.

In the present disclosure, each component may include plural kinds of particles corresponding to the component. In the case in which plural kinds of particles corresponding to a component are present in a composition, the particle size of the component means a value with respect to the mixture of the plural kinds of particles present in the composition, unless otherwise specified.

The term "layer" or "film" as used herein encompasses, when a region in which the layer or the film is present is observed, not only a case in which the layer or the film is formed over the entire observed region, but also a case in which the layer or the film is formed at only a part of the observed region.

The term "layered (stacked)" as used herein means disposing layers on one another, in which two or more layers may be bonded with each other, or may be attachable to/detachable from one another.

In the present disclosure, the particle size distribution of primary particles included in a negative electrode material or composite particles can be measured using a laser diffraction particle size distribution analyzer. The average particle size of particles means a particle size at which the cumulative volume from the small diameter side of a volume-based particle size distribution reaches 50% (D50). D90 means a particle size at which the cumulative volume from the small diameter side of the volume-based particle size distribution reaches 90%, and D10 means a particle size at which the cumulative volume from the small diameter side of the volume-based particle size distribution reaches 10%.

«Negative Electrode Material for Lithium-Ion Secondary Battery»

A negative electrode material for a lithium-ion secondary battery of the present disclosure includes graphite particles satisfying the following Formula (1):

$$[\text{Springback rate} \times 7.6] + [\text{Compressive load (kN/cm}^2)] \geq 4.2 \cdots (1).$$

The present inventors found that voids between graphite particles disappear in the process of repeating charging and discharging of a lithium-ion secondary battery, and the liquid absorption of the negative electrode decreases due to the occurrence of portions where the electrolytic solution and the negative electrode active material cannot contact. It is considered that in a case in which the electrolyte can flow easily in the negative electrode, and the liquid absorption of the negative electrode can be improved even when a lithium-ion secondary battery is repeatedly charged and discharged, the decrease in the cycle capacity retention rate can be reduced, and the cycle characteristics can be improved.

In consideration of the above, the present inventors investigated the physical properties of the negative electrode material and the physical properties of the negative electrode that contribute to the liquid absorption in the negative electrode. As a result, the inventors have found that the combination of the springback rate and compressive load of the graphite particles, which are the negative electrode material, has a strong correlation with the liquid absorption.

Then, the present inventors have found that by adjusting the combination of the springback rate and compressive load of the graphite particles to an appropriate range, that is, by satisfying the above formula (1) for the graphite particles, the liquid absorption of the negative electrode can be improved and the excellent cycle characteristics of a lithium-ion secondary battery can be easily maintained.

The reason why the combination of the springback rate and compressive load of the graphite particles has a strong correlation with liquid absorption is not necessarily clear, but it can be considered as follows.

The fact that the compressive load of the graphite particles is large means that the graphite particles are difficult to deform due to compression. Therefore, when the compressive load of the graphite particles is large, the voids between the graphite particles are difficult to disappear, and in the negative electrode including the graphite particles, the paths through which the electrolytic solution passes are suitably secured, and the occurrence of portions where the electrolytic solution and the negative electrode active material cannot contact is restrained.

The high springback rate of the graphite particles means that the graphite particles are less likely to break or break due to compression. Therefore, when the springback rate of the graphite particles is high, some of the graphite particles are less likely to break, and voids between the graphite particles are less likely to disappear. As a result, in the negative electrode including the graphite particles, paths through which the electrolytic solution passes are preferably ensured, and the occurrence of portions where the electrolytic solution and the negative electrode active material cannot contact is restrained.

From the above points, it is considered that the combination of the springback rate and compressive load of the graphite particles has a strong correlation with the liquid absorption, and that the liquid absorption of the negative electrode is improved by improving the springback rate and compressive load of the graphite particles.

(Compressive Load)

The compressive load of the graphite particles is not particularly limited as long as the graphite particles are satisfied with the aforementioned formula (1). For example, from the viewpoint of restraining deformation of the graphite particles or the like by pressing when producing a negative electrode, and from the viewpoint of improving cycle characteristics, the compressive load of the graphite particles is preferably 2.0 kN/cm$^2$ or more, more preferably 2.4 kN/cm$^2$ or more, still more preferably 2.8 kN/cm$^2$ or more, and particularly preferably 3.0 kN/cm$^2$ or more.

From the viewpoint of restraining deformation of a current collector, peeling of a current collector from the active material, or the like, the compressive load of the graphite particles may be 4.5 kN/cm$^2$ or less, may be 4.3 kN/cm$^2$ or less or may be 4.0 kN/cm$^2$ or less.

In the present disclosure, the compressive load of the graphite particles is the amount of pressure required to compress them to a density of 1.7 g/cm$^3$, and it means that the larger the compressive load, the less likely deformation, breakage, or the like of the graphite particles will occur due to pressurization.

Specifically, a mold is filled with graphite particles of a predetermined mass (for example, 3.0 g) and compressed at a constant speed (for example, 10 mm/min), and the pressure (kN/cm$^2$) when the density of the compressed graphite particles is reached to 1.7g/cm$^3$ is regarded as the compressive load of the graphite particles.

For the above measurements, for example, a mold with a diameter of 15 mm is used, and compression is performed using an autograph (manufactured by Shimadzu Corporation, for example). The density of graphite particles is calculated from the volume of the graphite particles calculated from the bottom area of the mold (for example, 1.767 cm$^2$) and the distance from the bottom surface of the mold to the pressing surface of the graphite particles, and the mass of the graphite particles.

(Springback Rate)

The springback rate of the graphite particles is not particularly limited as long as the graphite particles can satisfy the above formula (1). For example, from the viewpoint of further restraining breakage of graphite particles due to pressing during negative electrode production, the springback rate of graphite particles is preferably 0.25 or more, preferably 0.27 or more, and more preferably 0.30 or more.

From the viewpoint of ease of densification by pressing during negative electrode production, the springback rate of the graphite particles may be 0.50 or less, may be 0.45 or less, or may be 0.40 or less.

In the present disclosure, the springback rate of graphite particles is the degree to which the density decreases when the pressure is released after the graphite particles are compressed to a standard density. The larger the springback rate, the easier it is for graphite particles deformed by compression to return to their original state.

Specifically, a mold is filled with graphite particles of a predetermined mass (for example, 3.0 g), and the graphite particles are compressed at a constant speed (for example, 10 mm/min) until the density of the graphite particles reaches the standard density (for example, 1.7 g/cm$^3$). After that, the pressure is released, and when the press surface stops moving due to elasticity, the density after releasing the pressure (g/cm$^3$) is measured. From the obtained values, the springback rate is calculated by the following formula.

$$\text{Springback rate} = \{(\text{Standard density-Density after pressure release})/\text{Standard density}\}$$

For the above measurements, for example, a mold with a diameter of 15 mm is used, and compression is performed using an autograph (manufactured by Shimadzu Corporation, for example). The density of graphite particles is calculated from the volume of the graphite particles calculated from the bottom area of the mold (for example, 1.767 cm$^2$) and the distance from the bottom surface of the mold to the pressing surface of the graphite particles, and the mass of the graphite particles.

The compressive load and springback rate of the graphite particles can be adjusted by changing the physical properties, composition, or the like of the raw material for graphite particles (for example, needle coke), or by changing the graphitization conditions, or the like.

In the present disclosure, the graphite particles may satisfy the following formula (2) from the viewpoint of better cycle characteristics of a lithium-ion secondary battery.

$$[\text{Springback rate} \times 7.6] + [\text{Compressive load (kN/cm}^2)] \geq 4.5 \cdots (2)$$

In the present disclosure, a carbon material having an average interplanar spacing ($d_{002}$) as determined by an X-ray diffraction method of less than 0.340 nm is regarded as graphite.

In the present disclosure, as will be described later, particles in which low-crystalline carbon is disposed on at least a part of the surface of the graphite particles are also regarded as "graphite particles".

The theoretical value of the average interplanar spacing ($d_{002}$) of graphite crystals is 0.3354 nm, and the closer to this value, the more advanced the graphitization.

From the viewpoint of the initial charge/discharge efficiency and energy density of a lithium-ion secondary battery, the average interplanar spacing ($d_{002}$) is preferably 0.33600 nm or less, more preferably 0.33596 nm or less, and further preferably 0.33592 nm or less.

From the above viewpoint, the average interplanar spacing ($d_{002}$) of graphite particles is preferably from 0.3354 nm to 0.33600 nm, more preferably from 0.3354 nm to 0.33596 nm, and further more preferably from 0.3354 nm to 0.33592 nm.

The average interplanar spacing ($d_{002}$) can be calculated using Bragg's equation based on the diffraction peak corresponding to the 002 plane of carbon, which appears around the diffraction angle $2\theta$ of 24° to 27° in a diffraction profile obtained by irradiating the test sample with an X-ray (CuK$\alpha$ ray) and carrying out the measurement on the diffraction lines with a goniometer. The measurement of the average interplanar spacing ($d_{002}$) can be performed under the following conditions.

Radiation source: CuK$\alpha$ ray (wavelength = 0.15418 nm)
Output: 40 kV, 20 mA
Sampling width: 0.010°
Scanning range: 10° to 35°
Scanning speed: 0.5°/ min
Bragg's equation: $2d\sin\theta = n\lambda$

Here, d represents the length of a cycle; $\theta$ represents the diffraction angle; n represents the order of reflection; and $\lambda$ represents the wavelength of the X-ray.

(Specific Surface Area)

A specific surface area of graphite particles is not particularly limited. For example, from the viewpoint of further restraining the decomposition of an electrolytic solution, the specific surface area of graphite particles is preferably 2.7 $m^2/g$ or less, more preferably 2.5 $m^2/g$ or less, and still more preferably 2.2 $m^2/g$ or less.

The specific surface area of graphite particles may be 0.5 $m^2/g$ or more, may be 1.0 $m^2/g$ or more, or may be 1.2 $m^2/g$ or more. When the specific surface area is 0.5 $m^2/g$ or more, since the current density applied per unit area does not rise sharply and the load is reduced, the rapid charge and discharge performance tends to improve.

In the present disclosure, the specific surface area of graphite particles means a specific surface area ($N_2$ specific surface area) measured by nitrogen adsorption measurement at 77 K.

The $N_2$ specific surface area can be measured by the BET method based on the adsorption isotherm obtained by the nitrogen adsorption measurement at 77K. Specifically, the specific surface area can be obtained by the method described in the Examples.

The specific surface area of graphite particles can be adjusted by particle size distribution, particle structure or the like.

The specific surface area of graphite particles may be adjusted by coating of the graphite particles. When it is desired to make the particle size finer, the specific surface area is greatly increased due to the irregularities caused by the pulverization. By coating, the irregularities can be filled with a coating material to make them smooth and thus the specific surface area can be adjusted.

(Particles Structure of Graphite Particles)

The graphite particles include a state (composite particles) in which a plurality of graphite particles are gathered or bound together, or include composite particles (hereinafter, also referred to as specific composite particles) having a structure in which a plurality of flat graphite particles are stacked.

It is considered that the specific composite particles can reduce the contact area with an electrolytic solution inside the particles, compared to, for example, composite particles having a structure in which the main surfaces of a plurality of flat graphite particles are oriented in random directions, and decomposition of the electrolytic solution can be effectively restrained. Further, it is considered that deformation or breakage of the particles is unlikely to occur even if pressure is applied in the production of a negative electrode, and paths of the electrolytic solution between the particles are likely to be secured. Further, the electrolytic solution located inside the composite particles having a structure in which the main surfaces of the flat graphite particles are oriented in random directions has a complicated migration path and slows down. For this reason, it is considered that even an active material having a larger number of particle interfaces cannot exhibit high input/output performance due to diffusion hindrance. In particular, this tendency is conspicuous under input/output conditions where the C rate is high.

Flat graphite particles, which is included in the specific composite particles, refer to non-spherical graphite particles having anisotropy in shape. Examples of the flat graphite particles include vein, flake, and partially vein graphite particles.

Composite particles mean particles in which primary particles are gathered or bound together. Therefore, each of the specific composite particles has a structure in which a plurality of flat graphite particles are stacked with their main planes facing each other, thereby being gathered or bound together. Accordingly, a plurality of flat graphite particles are stacked almost in parallel to form composite particles. Whether or not the flat graphite particles are stacked or not can be confirmed by microscopic observation.

The state in which a plurality of flat graphite particles are gathered or bound together refers to a state in which two or more flat graphite particles are gathered or bound together. Being bound means that particles are chemically bound to each other either directly or via a carbon substance. Being gathered means that, while the particles are not chemically bound to each other, the particles maintain their shape as an assembled body owing to their shapes or the like.

The flat graphite particles may be gathered or bound together via a carbon substance. Examples of the carbon substance include graphite that results from graphitization of an organic binder such as tar or pitch. Whether or not the flat graphite particles are gathered or bound together can be confirmed by, for example, observation by a scanning electron microscope.

The flat graphite particles and the raw material thereof are not particularly limited, and examples thereof include artificial graphite, natural vein graphite, natural flake graphite, coke and resin. In particular, artificial graphite is preferable from the viewpoint of low deformability and a low specific surface area. In a case in which natural graphite is partly used as a raw material, it is preferable that the content of the natural graphite in the specific composite particles is 40% by mass or less, from the viewpoint of being less likely to be spheroidized and ease of obtaining a stacked structure.

The average particle size of the flat graphite particles that constitute the specific composite particles is, for example, preferably from 5 $\mu$m to 25 $\mu$m, more preferably from 8 $\mu$m to 20 $\mu$m, and further preferably from 10 $\mu$m to 15 $\mu$m, from the viewpoint of ease of the gathering or the binding.

The average particle size of the flat graphite particles can be obtained by any of the following methods.

The average particle size of the flat graphitizable aggregates described below, which are a raw material of the specific composite particles, (i.e., the particle size at which the cumulative volume from the small diameter side of a volume-based particle size distribution reaches 50% (D50)) may be regarded as the average particle size of the flat graphite particles that constitute the specific composite particles.

Further, the average particle size of the flat graphite particles may be obtained as the median value of the particle sizes of random 100 flat graphite particles in an observation of the cross-section of the specific composite particles. In this case, the particle size of each of the flat graphite particles is an equivalent circle diameter, which is a diameter of a circle having the same area as its projected area.

The flat graphite particles included in the specific composite particles preferably have a particle size distribution D90/D10 of 4.4 or less, more preferably 4.0 or less, and further preferably 3.5 or less.

When the flat graphite particles have the particle size distribution D90/D10 of 4.4 or less, it is considered that since the particle size of flat graphite particles is relatively uniform, the contact area with an electrolytic solution inside the obtained specific composite particles can be further reduced and decomposition of the electrolytic solution can be further restrained. Further, it is considered that deformation or breakage of the particles is further unlikely to occur even if pressure is applied in the production of a negative electrode, and paths of the electrolytic solution between the particles are further likely to be secured.

The lower limit of the particle size distribution D90/D10 is not particularly limited and for example, it may be 2.0 or more.

The particle size distribution D90/D10 of the flat graphite particles can be obtained by any of the following methods.

The particle size distribution D90/D10 of the flat graphitizable aggregates described above that is a raw material of the specific composite particles, obtained by a measurement with a laser diffraction particle size distribution analyzer (for example, SALD3100, manufactured by Shimadzu Corporation), may be regarded as the particle size distribution D90/D10 of the flat graphite particles that constitute the specific composite particles.

Further, the particle size distribution D90/D 10 of the flat graphite particles can be obtained by observing cross-sections of the specific composite particles using a scanning microscope, and obtaining a ratio of the particle size (D90) at which the cumulative volume from the small diameter side reaches 90% to the particle size (D10) at which the cumulative volume from the small diameter side reaches 10% in random 1000 flat graphite particles. In this case, the particle size of each of the flat graphite particles is an equivalent circle diameter, which is a diameter of a circle having the same area as its projected area.

The flat graphite particles preferably have an aspect ratio of, for example, from 2 to 20, more preferably from 4 to 10, the aspect ratio being represented by A/B in which A represents the length in the major axis direction and B represents the length in the minor axis direction. When the aspect ratio is 2 or more, the outer surface area is further increased, by which the particles tend to aggregate owing to a force of reducing the applied buoyancy. By the particles aggregating with the planes having the major axis facing each other so as to minimize the outer surface area, adhesion areas between the particles are maximized, and accordingly, combined with the van der Waals force between the particles, the particles tend to adhere to each other more tightly and be stabilized. When the aspect ratio is 20 or less, input/output characteristics of the lithium-ion secondary battery, such as rapid charge/discharge characteristics, tend to be further improved. When the aspect ratio is 20 or less, a situation can be restrained in which each of the flat graphite particles is thinner, whereby higher number of particles are stacked, leading to increased spaces inside the particles and thereby an increased specific surface area, resulting in deterioration of storage characteristics.

The aspect ratio is an arithmetic average value of the measured values of A/B for each of randomly selected 100 graphite particles out of the graphite particles observed with a microscope. In the observation for the aspect ratio, the length A in the major axis direction and the length B in the minor axis direction are measured as follows. In a projected image of a graphite particle observed using a microscope, the length A in the major axis direction is obtained as a distance between tangents a1 and a2, which are two parallel tangents which contacts with the circumference of the graphite particle and are selected such that the distance therebetween takes the maximum value. The length B in the minor axis direction is obtained as a distance between tangents b1 and b2, which are two parallel tangents which contacts with the circumference of the graphite particle and are selected such that the distance therebetween takes the minimum value.

When the graphite particles includes the specific composite particles, all of the graphite particles may be the specific composite particles or a part of the graphite particles may be graphite particles other than the specific composite particles.

When the graphite particles are a mixture of the specific composite particles and particles other than the specific composite particles, a ratio of the specific composite particle with respect to a total amount of the graphite particles may be 50% by mass or more, may be 60% by mass or more, may be 70% by mass or more, may be 80% by mass or more or may be 90% by mass or more. The ratio of the specific composite particle with respect to a total amount of the graphite particles may be 95% by mass or less.

Low-crystalline carbon may be disposed on at least a part of the surface of the graphite particles. When low-crystalline carbon is disposed on at least a part of the surface of the graphite particles, charging characteristics at low temperature tend to be further improved when a lithium-ion secondary battery is fabricated.

On the other hand, low-crystalline carbon does not need to be disposed on the surface of the graphite particles. When low-crystalline carbon is not disposed on the surface of the graphite particles, a possibility of deterioration of storage characteristics tends to be restrained, the deterioration being due to the occurrence of cracks and peelings of the graphite particles during the pressing in the process of fabricating an electrode, which increases the decomposition activity of the electrolytic solution. Further, this has an advantage in expanding flexibility in manufacturing conditions. It has been found that the graphite particles according to the present disclosure tends to enable excellent rapid input/output characteristics even when low-crystalline carbon is not disposed on the surface thereof. This is presumably because hardness, elasticity or the like has a greater influence on the rapid input/output characteristics than the surface structure of the graphite particles.

In the present disclosure, "low-crystalline carbon" refers to carbon having an R value of 0.2 or more as measured by Raman spectroscopy.

The R value is a value given as a peak intensity ratio Id/Ig in which Id is an intensity of the largest peak that appears at around 1360 cm$^{-1}$ and Ig is an intensity of the largest peak that appears at around 1580 cm$^{-1}$, in laser Raman spectroscopy at a wavelength of 532 nm.

The peak that appears at around 1360 cm$^{-1}$ is a peak that is generally identified as corresponding to the amorphous carbon structure, and is a peak observed between 1300 cm$^{-1}$ and 1400 cm$^{-1}$, for example. The peak that appears at around 1580 cm$^{-1}$ is a peak that is generally identified as corresponding to the graphite crystal structure, and is a peak observed between 1530 cm$^{-1}$ and 1630 cm$^{-1}$, for example.

The R value can be determined using a Raman spectrometer (for example, XploRA PLUS manufactured by HORIBA, Ltd.) under the following conditions, the baseline of the obtained spectrum being within the following range.

- Laser wavelength: 532 nm
- Laser intensity: 100 mW or more
- Neutral density filter: 1%
- Irradiation intensity: 1 mW
- Measurement range: 1000 cm$^{-1}$ to 1800 cm$^{-1}$
- Irradiation time: 30 seconds
- Irradiation area : 1 $\mu$m$^2$

- Baseline (D band): 1100 $_{cm}$-1 to 1470 cm$^{-1}$
- Baseline (G band): 1450 cm$^{-1}$ to 1710 cm$^{-1}$
- Number of accumulated times for one particle: 2 times
- Number of particles measured: 30 particles

(Average Particle Size)

The graphite particles preferably have an average particle size of, for example, from 5 $\mu$m to 30 $\mu$m, more preferably from 8 $\mu$m to 25 $\mu$m, and further preferably from 10 $\mu$m to 20 $\mu$m, from the viewpoint of further improving the permeability of the electrolytic solution.

The average particle size of the graphite particles can be measured using a laser diffraction particle size distribution analyzer (for example, SALD3100, manufactured by Shimadzu Corporation). The average particle size is the particle size (D50) at which the cumulative volume from the small diameter side of the volume-based particle size distribution reaches 50%.

Examples of measurement method of the average particle size of graphite particles in a state included in a negative electrode include: a method in which a sample electrode is fabricated, embedded in an epoxy resin, mirror-polished, and observed in its cross-section with a scanning electron microscope (for example, VE-7800 manufactured by Keyence Corporation); and a method in which a cross-section of an electrode prepared using an ion milling apparatus (for example, E-3500, manufactured by Hitachi High-Tech Corporation) is observed using a scanning electron microscope (for example, VE-7800 manufactured by Keyence Corporation). The average particle size in this case is a median value of the particle sizes of 100 randomly selected particles.

(Particle Size Distribution D90/D10)

A particle size distribution D90/D10 of graphite particles is preferably 5.0 or less, more preferably 4.0 or less, and further preferably 3.0 or less. When the particle size distribution D90/D10 of graphite particles is 5.0 or less, the path of the electrolytic solution tends to be favorably maintained, and liquid permeation property of the electrolytic solution tends to be favorably maintained.

The lower limit of the particle size distribution D90/D10 of graphite particles is not particularly limited and for example, may be 2.0 or more.

The particle size distribution D90/D10 can be measured using a laser diffraction particle size distribution analyzer (for example, SALD3100, manufactured by Shimadzu Corporation).

Examples of measurement method of the particle size distribution D90/D10 of graphite particles in a state included in a negative electrode include: a method in which a sample electrode is fabricated, embedded in an epoxy resin, mirror-polished, and observed in its cross-section with a scanning electron microscope (for example, VE-7800 manufactured by Keyence Corporation); and a method in which a cross-section of an electrode prepared using an ion milling apparatus (for example, E-3500, manufactured by Hitachi High-Tech Corporation) is observed using a scanning electron microscope (for example, VE-7800 manufactured by Keyence Corporation). The particle size distribution D90/D10 in this case can be obtained by the following method.

(1) The area Sn of a projected particle image (n is a particle unique number assigned to the selected particle) is obtained using a binarization method or the like.
(2) The equivalent circle diameter Ln = $\sqrt{Sn}$ / $\pi$ is obtained from the area Sn, assuming that the particle is a true sphere with an ideal shape.
(3) The sphere volume Vn = (4/3) $\pi$ (Ln)$^3$ is obtained based on the equivalent circle diameter Ln.
(4) The processes (1) to (3) are repeated for selected 100 particles.
(5) In the distribution curve in which the vertical axis represents the cumulative value % of volume for 100 particles and the horizontal axis represents the particle size, the particle size at a point at which the curve corresponds to 10% in the horizontal axis is defined as 10% diameter (D10), and the particle size at a point at which the curve corresponds to 90% in the horizontal axis is defined as 90% diameter (D90), whereby D90/D10 can be obtained.

(Standard Deviation of Particle Size Distribution)

The standard deviation of the particle size distribution of the graphite particles is preferably 0.30 or less, more preferably 0.25 or less, and further preferably 0.20 or less. It is considered that, when the standard deviation of the particle size distribution is 0.30 or less, the path of the electrolytic solution tends to be preferably maintained, whereby the liquid permeation property of the electrolytic solution is favorably maintained. The lower limit of the standard deviation of the particle size distribution is not particularly limited. The standard deviation of the particle size distribution can be measured using a laser diffraction particle size distribution analyzer (for example, SALD3100, manufactured by Shimadzu Corporation) based on a frequency distribution graph in which the horizontal axis indicates the log scale of the particle size and the vertical axis indicates the amount of particles (%).

(Oil Absorption)

The oil absorption of the graphite particles is preferably from 10 mL/100g to 60 mL/100g, more preferably from 15 mL/100g to 45 mL/100g, and further preferably from 20 mL/100g to 40 mL/100g.

The oil absorption of graphite particles is an index of the amount of pores present inside and on the surface of the particles and voids between particles.

It is considered that when the oil absorption of graphite particles is 60 mL/100g or less, the amount of pores present inside and on the surface of the particles is small, and contact area with electrolyte is sufficiently small. In addition, owing to the small interface, the amount of the binder used for producing a negative electrode can be reduced, whereby electric resistance tends to be reduced and battery performance tends to be improved. Further, owing to the small pore volume, the amount of solvent at the time of drying the electrode can be reduced, which is advantageous in terms of environment and manufacturing cost such as reduction in equipment and electric power involved in the drying.

When the oil absorption of graphite particles is 10 mL/100g or more, increase in the viscosity of the slurry at the time of kneading with a binder and the like owing to the small amount of voids between the particles tends to be restrained. Further, the binder tends to spread favorably, whereby the kneading can be easily carried out. In addition, the spaces between the particles, which allow lithium ions to move, tend to be secured.

In the present disclosure, the oil absorption of graphite particles may be measured by a method described in JIS K 6217-4: 2017 (Carbon Black for Rubber - basic characteristics - section IV: measurement of oil absorption), using linseed oil (for example, manufactured by Kanto Chemical Co., Inc.) as the reagent instead of dibutyl phthalate (DBP).

Specifically, linseed oil is applied to a test powder using a constant rate buret, and a change in the viscosity characteristics is measured using a torque detector. The addition amount of linseed oil per unit mass of the test powder that corresponds to the torque of 70% of the maximum torque generated is regarded as the oil absorption (mL/100 g). As for the measurement apparatus, an absorption tester available from Asahisouken Corporation (product name: S-500), for example, may be used.

(Peak Intensity Ratio of Rhombohedral Structure)

In the graphite particles, the ratio of peak intensities (P1/P2, also referred to as a peak intensity ratio of the rhombohedral structure) of a diffraction peak (P1) of a (101) plane of a rhombohedral structure to a diffraction peak (P2) of a (101) plane of a hexagonal structure in an X-ray diffraction pattern by a CuKα ray may be 0.15 or less, may be 0.10 or less, or may be 0.05 or less. The peak intensity ratio (P1/P2) is preferably within the undetectable range by the following method

When the peak intensity ratio (P1/P2) is 0.15 or less, graphite particles have a higher degree of graphitization, whereby charge/discharge capacity tends to be high.

The peak intensity ratio of the rhombohedral structure in the graphite particles can be calculated based on the intensity ratio of the diffraction line of the rhombohedral structure (P1: diffraction angle 43.2°) to the diffraction line of the hexagonal structure (P2: diffraction angle 44.3°) in an X-ray diffraction pattern by a CuKα ray. Here, the diffraction angle is represented by 2θ (θ represents the Bragg angle). The diffraction line of the (101) plane of the rhombohedral structure appears at the diffraction angle of 43.2°, and the diffraction line of the (101) plane of the hexagonal structure appears at the diffraction angle of 44.3°

(Degree of Graphitization)

In the graphite particles, a degree of graphitization measured by an X-ray diffraction method may be from 90.0 to 100.0%, may be from 90.5 to 99.0%, or may be from 91.0 to 98.0%.

For example, when the degree of graphitization is 98.0% or less in graphite particles having relative high particles size of more than 12 μm, the graphite particles tend to have a high hardness, and deformation, destruction or the like of the particles tends to be less likely to occur. When a high degree of graphitization is desired, the hardness can also be increased by reducing the particle size to less than 10 μm. For example, the particle shape can be maintained even at a degree of graphitization of 100%.

When the degree of graphitization is 90.0% or more, the graphite particles tend to have an excellent discharge capacity.

The degree of graphitization in graphite particles can be measured as follows, for example.

60 parts by mass of the graphite particles and 40 parts by mass of silicon powder (e.g., Fujifilm Wako Pure Chemical Corporation, purity 99.9%) are mixed in an agate mortar for 5 minutes, and the obtained mixture is placed in a cell for X-ray diffraction measurement. Using an X-ray diffractometer (e.g., an X-ray diffractometer manufactured by Rigaku Corporation, X-RAY DIFFRACTIOMETER MultiFlex), the diffraction angle corresponding to the (002) plane of graphite and the diffraction angle corresponding to the (111) plane of silicon are measured by X-ray diffraction measurement using a CuKα ray (2θ = 25° to 29°).

The correct diffraction angle of graphite is obtained by correcting the observed diffraction angles of silicon and graphite using the theoretical diffraction angle of Si (2θ = 28.442°).

The interplanar spacing (Å) of the d(002) plane of the negative electrode material is calculated using Bragg's equation (2dsinθ = nλ), and the degree of graphitization is calculated by the following equation.

$$\text{Degree of graphitization} = [(3.44\text{-interplanar spacing})/(0.086)] \times 100$$

«Method of Evaluating Negative Electrode Material for Lithium-Ion Secondary Battery »

A method of evaluating a negative electrode material for a lithium-ion secondary battery of the present disclosure evaluates a negative electrode material for a lithium-ion secondary battery using a regression formula obtained by multiple regression analysis with a springback rate of graphite particles included in the negative electrode material for a lithium-ion secondary battery and a compressive load ($kN/cm^2$) of the graphite particles as explanatory variables and a liquid absorption time of a negative electrode including the negative electrode material for a lithium-ion secondary battery as an objective variable.

The inventors found that the combination of the springback rate and compressive load of the graphite particles, which is included in the negative electrode material, has a strong correlation with liquid absorption. Therefore, by using the regression equation obtained by the multiple regression analysis as described above, the liquid absorption time of the negative electrode can be estimated from the springback rate and compression load of the graphite particles. Since the cycle characteristics of a lithium-ion secondary battery including a negative electrode can be evaluated from the liquid absorption time of the negative electrode, the performance of the negative electrode material for a lithium-ion secondary battery can be easily evaluated by the evaluation method of the present disclosure.

For example, the liquid absorption time of a negative electrode using graphite particles having a specific springback rate and compression load can be estimated by the following formula (2), which is a regression equation.

$$\text{(Liquid absorption time)} = \text{a-b} \times \text{(Springback rate)-c} \times \text{(Compressive load)} \cdot \cdot \cdot (2)$$

In formula (2), a, b, and c each represent a constant.

The number of samples for the springback rate and compressive load of the graphite particles and the liquid absorption time when performing multiple regression analysis is not particularly limited as long as it is the usual number of samples when performing multiple regression analysis, and for example, may be 20 or more or may be 30 or more. The liquid absorption time in the above formula (2) may be a conversion value when the value of the liquid absorption time of a specific sample is regarded as 100.

«Method 1 of Producing Negative Electrode Material for Lithium-Ion Secondary Battery »

The method 1 of producing a negative electrode material for a lithium-ion secondary battery of the present disclosure produces a negative electrode material for a lithium-ion secondary battery based on an evaluation result of a negative electrode material for a lithium-ion secondary battery using the evaluation method of a negative electrode material for a lithium-ion secondary battery of the above-described present disclosure. The producing method 1 of the present disclosure may include a step of graphitizing coke.

For example, in the production method 1 of the present disclosure, a negative electrode material for a lithium-ion secondary battery may be produced, which includes a graphite particles having a springback rate and compressive load such that the calculated value of the liquid absorption time is set to a specific value or less based on the relationship of the above formula (2). Preferred conditions for producing a negative electrode material for a lithium-ion secondary battery in the producing method 1 of the present disclosure are the same as the conditions described in the producing method 2 of the present disclosure below.

«Method 2 of Producing Negative Electrode Material for Lithium-Ion Secondary Battery »

The method 2 of producing a negative electrode material for a lithium-ion secondary battery of the present disclosure is a method of producing a negative electrode material for a lithium-ion secondary battery for producing the negative electrode material for a lithium-ion secondary battery of the present disclosure and includes a step of graphitizing coke.

In the producing method 2 of the present disclosure, coke is graphitized to produce a negative electrode material for a lithium-ion secondary battery, which is artificial graphite. Graphite particles, which are artificial graphite, tend to have a higher springback rate than natural graphite, and tend to easily satisfy the above formula (1).

The type of coke used in the producing method 1 and producing method 2 (hereinafter also simply referred to as "producing method") is not particularly limited, and examples thereof include petroleum-based or coal-based cokes such as fluid coke, needle coke, mosaic coke, and semi-needle cokes having properties between needle coke and mosaic

Among them, needle coke and semi-needle coke, which tend to have a small thermal expansion coefficient, are preferably used. Furthermore, since semi-needle coke and needle coke have high crystallinity, flat particles are likely to be obtained. In addition, since needle coke has high crystallinity, the particles are large, and it is easy to adjust the particle size by pulverization and classification. Coke may use only one type, or may use two or more types in combination. Needle coke and semi-needle coke may be used in combination within the range that satisfies the above conditions.

The method of obtaining coke particles is not particularly limited, and can be carried out by a known method. The particle size of the coke particles is not particularly limited, and can be selected in consideration of the desired particle size, particle structure or the like of the graphite particles.

From the viewpoint of improving the compressive load of the graphite particles, the thermal expansion coefficient after firing at 1400°C of the coke is preferably $2.30 \times 10^{-6}$/°C or more. The thermal expansion coefficient after firing at 1400°C of the coke is more preferably from $2.50 \times 10^{-6}$/°C to $4.00 \times 10^{-6}$/°C, and further preferably from $2.80 \times 10^{-6}$/°C to $3.70 \times 10^{-6}$ /°C.

The thermal expansion coefficient of coke is measured by the following method. 70 g of coke after firing at 1400°C and 30 g of binder pitch are mixed for 5 minutes to homogenize. 15 g of distilled oil that is liquid at room temperature is added to 100 g of this mixed product, and thus obtained mixture is mixed for 3 minutes with a planetary mixer or the like to obtain a sample. This sample is placed in a pressure molding machine and pressed at a surface pressure of 10 MPa for 30 seconds for molding. The molded product is heated from room temperature (25°C) to 1000°C over 5 hours in a nitrogen atmosphere, held at 1000°C for 1 hour, and then cooled to obtain a fired product. This fired product is cut into a size of 5.0 mm×5.0 mm×15.0 mm by a precision cutting machine to obtain a test piece. This test piece is subjected to thermal expansion measurement in a measurement temperature range of 30°C to 500°C using a TMA (thermo-mechanical analyzer, for example, manufactured by Hitachi High-Technologies Corporation) to calculate the CTE.

The graphite particles produced by the above producing method may be in a state in which a plurality of graphite particles are aggregated or bonded (composite particles), and composite particles having a structure in which a plurality of flat graphite particles are stacked (specified composite particles).

Graphite particles in the state of specific composite particles can be produced, for example, by processing a mixture obtained by mixing flat coke particles with a binder to produce secondary particles having a structure in which flat coke particles are stacked, and then graphitizing the obtained secondary particles.

In a preferred embodiment, the method of producing a negative electrode material includes, in the following order:

a step of mixing flat coke particles with a binder to obtain a mixture,
a step of processing the mixture to produce secondary particles having a structure in which the flat coke particles are stacked;
and a step of graphitizing the secondary particles to obtain composite particles (specific composite particles) having a structure in which a plurality of flat graphite particles are stacked.

When producing the specific composite particles, the method may include a step of classifying flat coke particles to remove at least one selected from the group consisting of fine particles and coarse particles. By classifying the coke particles, the layered structure of the specific composite particles tends to be formed more densely, and the specific surface area tends to be more restrained.

When producing the specific composite particles, the method may include the step of classifying the obtained specific composite particles to remove at least one selected from the group consisting of fine particles and coarse particles. By classifying the specific composite particles, variation in the particle size of the specific composite particles tends to be restrained, and the paths of the electrolytic solution tends to be favorably maintained.

Therefore, in a preferable embodiment, the method of producing a negative electrode material according to the present disclosure include, in the following order:

(a) optionally, classifying coke particles and removing at least one selected from the group consisting of fine particles and coarse particles;

(b) mixing the flat coke particles with a binder to obtain a mixture;

(c) processing the mixture to produce secondary particles, each of the secondary particles having a structure in which the flat coke particles are stacked;

(d) graphitizing the secondary particles to obtain composite particles (specific composite particles), each of the composite particles having a structure in which a plurality of flat graphite particles are stacked; and

(e) optionally, classifying the composite particles and removing at least one selected from the group consisting of fine particles and coarse particles.

In the present disclosure, "fine particles" refer to particles having a smaller particle size than the particles collected by the classification, and "coarse particles" refer to particles having a larger particle size than the particles collected by the classification.

Hereinafter, each process that may be included in the method of producing a negative electrode material according to the present disclosure will be described in detail.

[(a) Classifying flat coke particles and removing at least one selected from the group consisting of fine particles and coarse particles]

For the flat coke particles, classification may be performed before the compositing to remove at least one selected from fine particles and coarse particles. By the classification, the particle size distribution D90/D10 of the flat coke particles may be adjusted to, for example, from 2.0 to 4.4, preferably from 2.0 to 4.0, and more preferably from 2.0 to 3.5.

In the classification, for example, it is preferable that fine parcicles having a particle size of 1 $\mu$m or less are removed; it is more preferable that fine particles having a particle size of 2 $\mu$m or less are removed; and it is further preferable that fine particles having a particle size of 3 $\mu$m or less are removed.

Further, in the classification, for example, it is preferable that coarse parcicles having a particle size of 60 $\mu$m or more are removed; it is more preferable that coarse parcicles having a particle size of 50 $\mu$m or more are removed; and it is further preferable that coarse parcicles having a particle size of 40 $\mu$m or more are removed. The removed particles may be crushed and utilized again as a raw material.

The method of classification is not partcularly limited, and examples thereof include classification using a sieve, classification using an air flow-type centrifuge, and a precision air flow classifying machine using the Coanda effect. It can also be adjusted by pulverizing coarse particles by intensively applying compression pressure using a roll mill.

[(b) Mixing the flat coke particles with a binder to obtain a mixture]

For the binder, a graphitizable binder is used. Examples of the binder include coal-based, petroleum-based, or artificial pitch or tar, a thermoplastic resin, a thermosetting resin, starch and the like. It is preferable to select a binder having a low viscosity so that flat particles have high fluidity in the mixing step.

Further, if necessary, a graphitization catalyst, a fluidity imparting agent and the like may be added.

Examples of the graphitization catalyst include a substance having a graphitization catalytic function, such as silicon, iron, nickel, titanium, boron, vanadium, or aluminum; a carbide, an oxide, or a nitride thereof; and a mica clay mineral.

The amount of the graphitization catalyst is not particularly limited, as long as a desired substance is obtained. From the viewpoint of restraining excessive graphitization, it is preferable that no graphitization catalyst is blended, or that the blending amount is reduced. For example, in a case in which the graphitization catalyst is silicon carbide (SiC), the amount of the silicon carbide is preferably 5% by mass or less, more preferably 3% by mass or less, and more preferably 1% by mass or less with respect to the mass of the graphitizable aggregates.

The mixing method is not particularly limited. From the viewpoint of reducing the amount of pores in the secondary particles, a mixing method in which shearing force is minimized, for example, a mixing method using a kiln-type mixer, a paddle stirrer or the like, is preferable. It is preferable that a kneader that involves kneading, which is called a kneading machine, for example, is not used.

[(c) Processing the mixture to produce secondary particles, each of the secondary particles having a structure in which the flat coke particles are stacked]

The method for processing the mixture is not particularly limited. In an embodiment, the processing may be performed by heating the mixture to volatilize the volatile component of the binder. The heating temperature is preferably 400°C or lower. When the heating temperature is 400°C or lower, fine pores caused by oxidative combustion tend to be reduced, whereby particles having a small specific surface area tend to be obtained. In this case, by heating the mixture while allowing the mixture to flow using a stirrer or the like, the particles tend to be preferably formed.

In heating the mixture, the pressure of the atmosphere may be reduced. By reducing the pressure of the athosphere, the coke particles tend to be impregnated with the binder more easily, whereby the spaces between the particles are filled, and stacked particles having only a small amount of inner pores tend to be obtained.

Hereinafter, specific examples of the method for producing the secondary particles will be described.

A mixture of coke particles and a binder is slowly stirred and mixed at a temperature above the softening point of the binder, preferably within a temperature range in which volatile component(s) are vaporized, until the volatile component(s) are removed. By slowly performing degassing before the graphitization (calcination), generation of air bubbles during the calcination of the crystals is reduced, whereby the amount of pores inside and on the surface of the particles becomes small, and a hard structural body having a small specific surface area and having excellent high-temperature resistance tends to be obtained. In this process, for the sake of good safety, it is preferable that inert gas such as nitrogen is introduced into the mixer to control the oxygen concentration to 15% or less to prevent volatile gas from being ignited. Further, it is preferable that the temperature inside the mixer is 400°C or lower, since fine pores caused by oxidative combustion tend to be reduced, whereby particles having a small specific surface area tend to be easily obtained. In addition, in a case in which pitch is used as a binder, pitch can become infusible by incorporating oxygen in the atmosphere. This enables favorable crystal development during the graphitization, whereby a denser crystal body with higher crystallinity can be obtaind. However, since unevenness due to oxidation is likely to occur, it is required to make adjustments in consideration of the specific surface area, hardness, or the like.

Degassing, infusibilization and depressurization, under the environment in which the flowability of the gas phase or the liquid phase in which the binder is softened is secured, tend to lead to a higher effect.

[(d) Graphitizing the secondary particles to obtain composite particles (specific composite particles), each of the composite particles having a structure in which a plurality of flat graphite particles are stacked]

In this process, the obtained secondary particles are graphitized. This process graphitizes graphitizable component(s) in the secondary particles. The graphitization is preferably performed in an atmosphere in which the mixture is hardly oxidized, and for example, the graphitization may be performed by heating the particles under nitrogen atmosphere or argon gas. The temperature of the graphitization is not particularly limited as long as the graphitizable component can be graphitized. For example, the temperature may be 2000°C or higher, may be 2500°C or higher, may be 2800°C or higher, or may be 3000°C or higher. The upper limit of the temperature is not particularly limited as long as the graphite does not sublimate, and for example, the temperature may be 3200°C or lower. The temperature of 2000°C or higher causes the change in the crystals. The temperature of 2500°C or higher leads to favorable graphite crystal development, and the temperature of 2800°C or higher leads to the development of the crystals to high-capacity graphite crystals capable of intercalate a large amount of lithium ions, whereby the amount of the graphitization catalyst remaining after the calcination tends to be reduced and increase in the ash amount tends to be restrained. In any of these cases, the charge/discharge capacity and cycle characteristics of the battery tend to be improved. On the other hand, when the temperature of the graphitization is 3200°C or lower, sublimation of a part of the graphite can be restrained.

The method of producing a negative electrode material may include a step of molding the secondary particles into a block or other shape before the graphitization, and a step of crushing the molded body after the graphitization. The molding of the secondary particles increases the bulk density and consequently the amount fed to the graphitization oven, whereby the energy efficiency is increased and the graphitization can be performed with reduced energy. Furthermore, when graphitizing a molded product obtained by molding secondary particles into a block or other shape, the compression load of graphite particles tends to be improved compared with the case where the secondary particles are packed in a case or the like and the powdery secondary particles are graphitized. In particular, from the viewpoint of further improving the compressive load of graphite, it is preferable that coke having a thermal expansion coefficient after firing at 1400°C of $2.80 \times 10^{-6}$/°C or more is used as a raw material and a molded product obtained by molding secondary particles into a block or other shape is graphitized.

In addition, when graphitizing a molded product obtained by molding secondary particles into a block or other shape, highly crystalline graphite tends to be obtained, and the discharge capacity of a lithium-ion secondary battery tends to be excellent, compared with the case where the secondary particles are packed in a case or the like and the powdery secondary particles are graphitized

The method for the molding is not particularly limited, and for example, the secondary particles may be compressed in a container such as a mold.

The method of producing a negative electrode material of the present disclosure also preferably does not include a step of molding the secondary particles before the graphitization (therefore, also does not include a step of pulverization the molded body). It is considered that this enables restraining the increase in the rhombohedral crystals during the step of the molding and the pulverization, whereby the high-temperature resistance can be further favorably improved.

The bulk density of the secondary particles before the graphitization is preferably from 0.4 $g/cm^3$ to 1.2 $g/cm^3$, more preferably from 0.6 $g/cm^3$ to 1.1 $g/cm^3$, and further preferably from 0.8 $g/cm^3$ to 1.0 $g/cm^3$. When the secondary particles before the graphitization has a bulk density of 0.4 $g/cm^3$ or more, dense composite particles tend to be obtained after the graphitization owing to the small amount of spaces inside the particles. When the secondary particles have a bulk density of 1.0 $g/cm^3$ or less, the crushing after the graphitization can be eliminated, and the crushing can be conducted with a weak force, whreby the increase in the rhombohedral crystals tends to be restrained.

In the present disclosure, the bulk density of particles can be determined by a weight measurement method. That is, the bulk density of particles can be determined by dividing the mass of the particles in the air by the bulk volume. Here, the mass of the particles refers to the mass excluding the graphitization catalyst (for example, in a case in which the secondary particles are mixed secondary particles of aggregates, a binder and a graphitization catalyst, the total mass of the aggregates and the binder, excluding the volatile component).

[(e) Classifying the composite particles and removing at least one selected from the group consisting of fine particles and coarse particles]

The obtained composite particles may be classified to remove at least one selected from the group consisting of fine particles and coarse particles. It is considered that this enables obtaining composite particles having a less varied particle size, whereby the path of the electrolytic solution can be maintained more favorably. The particle size distribution D90/D10 of the composite particles may be adjusted by classification within the above-described ranges, for example, from 2.0 to 5.0, preferably from 2.0 to 4.0, and more preferably from 2.0 to 3.0.

The method of classification is not partcularly limited, and examples thereof include classification using a sieve, classification using an air flow-type centrifuge, and a precision air flow classifying machine using the Coanda effect. It can also be adjusted by pulverizing coarse particles by intensively applying compression pressure using a roll mill.

In this process, in the case in which fine particles are removed, for example, it is preferable that fine parcicles having a particle size of 1 $\mu$m or less are removed; it is more preferable that fine particles having a particle size of 2 $\mu$m or less are removed; and it is further preferable that fine particles having a particle size of 3 $\mu$m or less are removed.

In this process, in the case in which coarse particles are removed, for example, it is preferable that coarse parcicles having a particle size of 60 $\mu$m or more are removed; it is more preferable that coarse parcicles having a particle size of 50 $\mu$m or more are removed; and it is further preferable that coarse parcicles having a particle size of 40 $\mu$m or more are removed.

[Other Processes]

The method of producing a negative electrode material according to the present disclosure may include a process other than those described above.

For example, the method of producing a negative electrode may include a process of heat-treating the secondary particles with an organic compound attached to the surface thereof after the graphitization. By heat-treating the secondary particles with an organic compound attached to the surface thereof, the organic compound attached to the surface changes into low-crystalline carbon. This enables disposing low-crystalline carbon on at least a part of the surface of the composite particles.

The method of attaching an organic compound to the surface of the secondary particles is not particularly limited. Examples thereof include: a wet method in which the secondary particles are dispersed and mixed in a mixed solution containing the organic compound dissolved or dispersed in a solvent, after which the solvent is removed to attach the organic compound; and a dry method in which a mechanical force is applied to a mixture obtained by mixing the secondary particles and a solid organic compound to attach the organic compound.

The organic compound is not particularly limited as long as it is a compound that changes into low-crystalline carbon by heat treatment (carbon precursor). Examples thereof include petroleum-based pitch, naphthalene, anthracene, phenanthroline, coal tar, a phenol resin, and polyvinyl alcohol. One type of the organic compound may be used singly, or two or more types thereof may be used in combination.

The temperature of the heat treatment at the time of heat-treating the secondary particles with an organic compound attached to the surface thereof is not particlualy limited, as long as it is a temperature at which the organic compound attached to the surface of the secondary particles changes into low-crystallin carbon. For example, the temperature is preferably from 400°C to 1500°C. From the viewpoint of especially improving high temperature resistance, the temperature is more preferably from 1000°C to 1500°C. The heat treatment is preferably performed in an inert gas atmosphere such as in a nitrogen atmosphere.

<<Negative Electrode for Lithium-Ion Secondary Battery »

The negative electrode for a lithium-ion secondary battery according to the present disclosure includes: a negative electrode material layer including the negative electrode material for a lithium-ion secondary battery according to the present disclosure; and a current collector. The negative electrode for a lithium-ion secondary battery may include other component(s) in addition to the negative electrode material layer including the negative electrode material for a lithium-ion secondary battery according to the present disclosure and a current collector, as necessary.

The negative electrode for a lithium-ion secondary battery can be produced, for example, by kneading a negative electrode material for a lithium-ion secondary battery and a binder together with a solvent to prepare a slurry of a negative electrode material composition for a lithium-ion secondary battery, and applying the slurry to a current collector to form a negative electrode material layer, or by forming a negative electrode material composition for a lithium-ion secondary battery in a form of a sheet or pellet and integrate it with a current collector. The kneading can be performed by a dispersing device, such as a disper stirrer or a planetary kneader.

The binder used for preparing the negative electrode material composition for a lithium-ion secondary battery is not particularly limited. Examples of the binder include: a styrene-butadiene copolymer (SBR); a homopolymer or copolymer of ethylenically unsaturated carboxylic acid ester, such as methyl acrylate, methyl methacrylate, ethyl acrylate, ethyl methacrylate, butyl acrylate, butyl methacrylate, hydroxyethyl acrylate, or hydroxyethyl methacrylate, or an ethylenically unsaturated carboxylic acid, such as acrylic acid, methacrylic acid, itaconic acid, fumaric acid, or maleic acid; a polymeric compound having high ionic conductivity, such as polyvinylidene fluoride, polyethylene oxide, polyepichlorohydrin, polyphosphazene, polyacrylonitrile, or polymethacrylonitrile. When the negative electrode material composition for a lithium-ion secondary battery contains a binder, the amount of the binder is not particularly limited. For example, the amount may be from 0.5 parts by mass to 20 parts by mass with respect to 100 parts by mass in total of the binder and the negative electrode material for a lithium-ion secondary battery.

The negative electrode material composition for a lithium-ion secondary battery may contain a thickener. Examples of the thickener include carboxymethyl cellulose, methyl cellulose, hydroxymethyl cellulose, ethyl cellulose, polyvinyl alcohol, polyacrylic acid or a salt thereof, oxidized starch, phosphorylated starch, and casein. When the negative electrode material composition for a lithium-ion secondary battery contains a thickener, the amount of the thickener is not particularly limited. For example, the amount may be from 0.1 parts by mass to 5 parts by mass with respect to 100 parts by mass of the negative electrode material for a lithium-ion secondary battery.

The negative electrode material composition for a lithium-ion secondary battery may contain a conductive aid. Examples of the conductive aid include: a carbon material, such as carbon black, graphite, or acetylene black; and an inorganic compound, such as an oxide that exhibits conductivity or a nitride that exhibits conductivity. When the negative electrode material composition for a lithium-ion secondary battery contains a conductive aid, the amount of the conductive aid is not particularly limited. For example, the amount may be from 0.5 parts by mass to 15 parts by mass with respect to 100 parts by mass of the negative electrode material for a lithium-ion secondary battery.

The material for the current collector is not particularly limited, and may be selected from aluminum, copper, nickel, thitanium, stainless steel and the like. The form of the current collector is not particularly limited, and may be selected from a foil, a perforated foil, a mesh and the like. Further, a porous material, such as a porous metal (foamed metal), a carbon paper, or the like may also be used for a current collector.

In the case in which the negative electrode material composition for a lithium-ion secondary battery is applied to a current collector to form a negative electrode material layer, the method thereof is not particularly limtied, and a known method, such as a metal mask printing method, an electrostatic coating method, a dip coating method, a spray coating method, a roll coating method, a doctor blade method, a comma coating method, a gravure coating method, or a screen printing method, may be adopted. After the application of the negative electrode material composition for a lithium-ion secondary battery to the current collector, the solvent contained in the negative electrode material composition for a lithium-ion secondary battery is removed by drying. The drying may be performed using, for example, a hot air dryer, an infrared dryer, or a combination of these devices. If necessary, rolling treatment may be performed on the negative electrode material layer. The rolling treatment can be performed by a method such as using a flat plate press, a calender roll or the like.

In the case in which the negative electrode material composition for a lithium-ion secondary battery formed in a shape of a sheet, pellet or the like is integrated with a current collector to form a negative electrode material layer, the method for the integration is not particularly limited. For example, the integration can be performed using a roll, a flat plate press, or a combination of these means. The pressure applied upon the integration of the current collector and the negative electrode material composition for a lithium-ion secondary battery is, for example, preferably from around 1 MPa to 200 MPa.

The negative electrode density of the negative electrode material layer is not particularly limited. For example, the negative electrode density is preferably from 1.1 $g/cm^3$ to 1.8 $g/cm^3$, more preferably from 1.1 $g/cm^3$ to 1.7 $g/cm^3$, and further preferably from 1.1 $g/cm^3$ to 1.6 $g/cm^3$. When the negative electrode density is 1.1 $g/cm^3$ or more, increase

in electric resistance tends to be restrained, whereby the capacity tends to be increased. When the negative electrode density is 1.8 g/cm$^3$ or less, deterioration in input characteristics and cycle characteristics tends to be restrained.

«Lithium-Ion Secondary Battery»

The lithium-ion secondary battery according to the present disclosure includes: the negative electrode for a lithium-ion secondary battery according to the present disclosure; a positive electrode; and an electrolytic solution.

The positive electrode can be obtained by forming a positive electrode material layer on a current collector in a similar manner to the method of producing a negative electrode described above. Examples of the current collector include those obtained by forming a metal or a metal alloy of aluminum, titanium or stainless steel in a shape of a foil, a perforated foil, a mesh or the like.

The positive electrode material used for forming the positive electrode material layer is not particularly limited. Examples of the positive electrode material include a metallic compound (for example, a metal oxide, a metal sulfide, etc.) and a conductive polymeric material that are capable of accomodating lithium-ion doping or intercalation. More specific examples include: a metal compound, such as lithium cobaltate ($LiCoO_2$), lithium nickelate ($LiNiO_2$), lithium manganate ($LiMnO_2$), a composite oxide thereof ($LiCo_xNi_yMn_zO_2$, x + y + z = 1), a composite oxide containing an additional element M' ($LiCo_aNi_b Mn_cM'_dO_2$, a + b + c + d = 1, M ': Al, Mg, Ti, Zr or Ge), spinel-type lithium manganese oxide ($LiMn_2O_4$), a lithium vanadium compound, $V_2O_5$, $V_6O_{13}$, $VO_2$, $MnO_2$, $TiO_2$, $MoV_2O_8$, $TiS_2$, $V_2S_5$, $VS_2$, $MoS_2$, $MoS_3$, $Cr_3O_8$, $Cr_2O_5$, olivin-type $LiMPO_4$ (M: Co, Ni, Mn, or Fe); a conductive polymer, such as polyacetylene, polyaniline, polypyrrole, polythiophene, or polyacene; a porous carbon; and the like. One type of the positive electrode material may be used singly, or two or more types thereof may be used.

The electrolytic solution is not particularly limited, and those in which a lithium salt as an electrolyte is dissolved in a non-aqueous solvent (a so-called organic electrolytic solution) may be used, for example.

Examples of the lithium salt include $LiClO_4$, $LiPF_6$, $LiAsF_6$, $LiBF_4$, and $LiSO_3CF_3$. One type of the lithium salt may be used singly, or two or more types thereof may be used.

Examples of the non-aqueous solvent include ethylene carbonate, fluoroethylene carbonate, chloroethylene carbonate, propylene carbonate, butylene carbonate, vinylene carbonate, cyclopentanone, cyclohexylbenzene, sulfolane, propanesulton, 3-methylsulfolane, 2,4-dimethylsulfolane, 3-methyl-1,3-oxazolidine-2-one, $\gamma$-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, ethyl acetate, trimethylphosphate ester, and triethylphosphate ester. One type of the non-aqueous solvent may be used singly, or two or more types thereof may be used.

The form of the positive electrode and the negative electrode in the lithium-ion secondary battery is not particularly limited. For example, the positive electrode, the negative electrode, and an optional separator disposed between the positive electrode and the negative electrode may be spirally wound, or laminated as a flat plate.

The separator is not particularly limited, and for example, a nonwoven fabric, a cloth, a microporous film, or a combination thereof, made of a resin, may be used. Examples of the resin include those containing a polyolefin, such as polyethylene or polypropylene, as a main component. In a case in which the lithium-ion secondary battery has a structure in which the positive electrode and a negative electrode do not contact each other directly, the separator does not need to be used.

The shape of the lithium-ion secondary battery is not particularly limited. Examples include a laminated battery, a paper battery, a button battery, a coin battery, a stacked battery, a cylindrical battery, and a square battery.

In particular, conventional cylindrical batteries are used in electric vehicles (EV), or the like, and the negative electrode material layer is densified and filled in a cylindrical case. Thereby, there is a tendency that the decrease in the cycle capacity retention rate due to interruption of electrical continuity is greatly restrained. However, since the negative electrode material layer has a high density, the voids between the graphite particles disappear in the process of repeated charging and discharging, and portions where the electrolyte cannot contact the negative electrode active material are occured and as a result, a decrease in the capacity retention rate due to an increase in a cell resistance is a problem.

On the other hand, the lithium-ion secondary battery of the present disclosure uses a negative electrode material capable of producing a negative electrode with excellent liquid absorption. Therefore, in the lithium-ion secondary battery of the present disclosure, even when the negative electrode material layer is densified like a cylindrical battery, it is possible to restrain both a decrease in the cycle capacity retention rate due to interruption of electrical continuity between graphite particles and a decrease in the cycle capacity retention rate due to the occurrence of portions where the liquid and the negative electrode active material cannot contact, and therefore the cycle characteristics tend to be excellent.

The lithium-ion secondary battery according to the present disclosure is suitable as a lithium-ion secondary battery having a large capacity used for electric vehicles, power tools, power storage devices and the like.

Examples

Hereinafter, the present disclosure will be described in detail below by way of Examples. However, the invention is not limited to these Examples.

«Determination of Correlation between Liquid Absorption Time and Powder Physical Properties»

Needle coke, which is petroleum-derived coke, was used as a raw material for graphite particles.

The above coke was coarsely ground with a hammer mill. The crushed material was sieved using a sieve with an opening of 3 mm, and the unsieved material was sieved using a sieve with an opening of 1 mm to recover granules with a particle size of 1 mm to 3 mm.

The obtained coke particles were pulverized and classified using a roller mill (Kurimoto, Ltd., K-VX mill) to obtain flat coke particles.

90% by mass of the obtained coke particles and 10% by mass of coal tar pitch (softening point : 100°C to 150°C, quinoline insoluble content : 15% by mass or less, fixed carbon : 55% to 75% by mass) were mixed at room temperature to obtain a mixture. Next, the inside of the mixing container containing the mixture was heated and decompressed at 300°C to 400°C under a mixed gas flow of dry air and nitrogen. At this time, if the stirring blades in the mixer are moved to make it easier to discharge the gas, the specific surface area tends to decrease. The end point of heating and stirring was determined to be the time when the current value of the stirring blades decreased and stabilized, using the phenomenon that the low-molecular-weight gas in the coal tar pitch volatilized and the viscosity of the mixture decreased, and secondary particles with a bulk density of 0.7 $g/cm^3$ were obtained.

Next, the secondary particles were packed in a graphitization case and graphitized at 3100°C. After that, the obtained particles were sieved through a 300-mesh screen to obtain graphite particles.

In addition to the above-mentioned graphite particles, 10 types of graphite particles were prepared, including the above-mentioned graphite particles, by changing the conditions for pulverizing or classifying coke particles, the stirring conditions for the mixer, and the graphitization conditions. Using these 10 types of graphite particles, D50, standard deviation of particle size distribution, specific surface area, tap density, compressive load and springback rate were determined, and furthermore, using these graphite particles, each of negative electrodes was produced as follows. Then, the orientation of the graphite particles in the negative electrode and the liquid absorption time of the negative electrode were determined.

(Tap Density)

100 $cm^3$ of sample powder of graphite particles was put into a graduated flat-bottomed test tube (KRS-406, manufactured by Kuramochi Scientific Instruments Co., Ltd.) with capacity of 150$cm^3$, and the graduated flat-bottomed test tube was capped. Then, the tap density was determined from the mass and volume of the sample powder after dropping the graduated flat-bottomed test tube 250 times from a height of 5 cm.

(Measurement of Orientation of Graphite Particles in Negative Electrode)

Graphite particles (97.6 parts by mass), carboxymethyl cellulose (CMC) (1.2 parts by mass) and styrene-butadiene rubber (SBR) (1.2 parts by mass) were kneaded to prepare a slurry. This slurry was applied to a glossy surface of an electrolytic copper foil in an amount of 10 $g/cm^2$. After pre-drying at 90°C for 2 hours, the electrode density was adjusted to be 1.70 $g/cm^3$ with a roll press. After that, a curing treatment was performed by drying at 120°C for 4 hours in a vacuum atmosphere to obtain a negative electrode for a lithium-ion secondary battery.

The orientation of the graphite particles was obtained by measuring the surface of the negative electrode for the lithium-ion secondary battery, which is the sample electrode, with an X-ray diffractometer using CuKα rays as the X-ray source.

Specifically, the X-ray diffraction pattern of the surface of the sample electrode was measured, and the orientation of the graphite particles was obtained by the following formula (X) from the intensity of the carbon (002) plane diffraction peak detected near the diffraction angle 2θ = 20° to 20° and the carbon (110) plane diffraction peak detected near the diffraction angle 2θ = 70° to 80°

(002) plane diffraction peak intensity/(1 10) plane diffraction peak intensity···formula (X)

The physical properties other than the tap density or the orientation of the graphite particles in the negative electrode were determined by the above-described method.

(Measurement of Liquid Absorption Time)

A negative electrode for a lithium-ion secondary battery obtained in the same manner as in (Measurement of Orientation of Graphite Particles in Negative Electrode) was punched into a square of 2.0 cm × 2.0 cm, and attached to a glass substrate with double-sided tape to form the electrode surface having a planar shape without distortion. Using a micropipette, 3 µL of PC (polycarbonate: manufactured by Kishida Chemical Co., Ltd.) was dropped onto the central portion of the square electrode, and the liquid absorption time until permeation was measured. Six of the same electrodes were prepared, and the average value of six measurement times was obtained.

Next, in the negative electrode for lithium-ion secondary battery produced by using the graphite particles, which was produced under the above conditions, with the compressive load of 2.804 kN/cm$^2$ and the springback rate of 0.277, the value of the liquid absorption time was regarded as a reference value of 100, the value obtained by converting the value of the liquid absorption time measured in each negative electrode for lithium-ion secondary battery based on the above reference value was defined as a liquid absorption time index.

For 10 types of graphite particles, the correlation between the powder physical properties obtained as described above and the liquid absorption time index was obtained using simple regression analysis and multiple regression analysis. The results of single regression analysis are shown in Table 1, and the results of multiple regression analysis are shown in Table 2.

[Table 1]

|  | D50 | Standard deviation of particle size distribution | Specific surface area | Tap density | Compressive load | Springback rate | Orientation |
|---|---|---|---|---|---|---|---|
| Correlation coefficient R with liquid absorption time index | 0.688 | -0.276 | 0.024 | -0.339 | -0.811 | -0.174 | 0.435 |

[Table 2]

|  | D50 and compressive load | Springback rate and compressive load | Compressive load and orientation |
|---|---|---|---|
| Coefficient of determination R$^2$ with liquid absorption time index | 0.659 | 0.998 | 0.905 |

As shown in Tables 1 and 2, a regression formula with the strongest correlation was obtained by performing multiple regression analysis with the springback rate and compression load as explanatory variables and the liquid absorption time index as the objective variable. The obtained regression formula is shown below.

$$\text{Regression formula} \cdots \text{(Liquid absorption time index)} = 337.7 - 369 \times \text{(Springback rate)} - 48.4 \times \text{(Compressive load)}$$

When the value of the liquid absorption time index is about 135 or less, the liquid absorption of the lithium-ion secondary battery becomes good, and deterioration of cycle characteristics in the process of repeating charging and discharging tends to be restrained. Therefore, considering that the right side of the above regression formula becomes 135 or less, the cycle characteristics of lithium ions are improved, and the following formula (1) was obtained.

$$[\text{Springback rate} \times 7.6] + [\text{Compressive load (kN/cm}^2)] \geq 4.2 \cdots (1)$$

In the following, graphite particles were produced in each Example and each Comparative Example, and the compressive load and springback rate of the produced graphite particles were measured. Then, based on the above regression formula, the calculated value of the liquid absorption time index of the negative electrode obtained using the graphite particles produced in each of Examples and Comparative Examples was obtained, and the cycle capacity retention index was obtained from the calculated value of the liquid absorption time index.

[Example 1]

Needle coke, which is petroleum-derived coke, was used as a raw material for graphite particles.

The above coke was coarsely ground with a hammer mill. The crushed material was sieved using a sieve with an opening of 3 mm, and the unsieved material was sieved using a sieve with an opening of 1 mm to recover granules with a particle size of 1 mm to 3 mm.

The obtained coke particles were pulverized and classified using a roller mill (Kurimoto, Ltd., K-VX mill) to obtain flat coke particles. When the volume-based particle size distribution of the coke particles was measured, D10 was 8.9 $\mu$m, D50 was 15.8 $\mu$m and D90 was 23.5 $\mu$m. A thermal expansion coefficient after firing at 1400°C of the coke particles was $3.52 \times 10^{-6}$/°C.

85% by mass of the obtained coke particles and 15% by mass of coal tar pitch (softening point : 100°C to 150°C, quinoline insoluble content : 15% by mass or less, fixed carbon : 55% to 75% by mass) were mixed at room temperature to obtain a mixture. Next, the inside of the mixing container containing the mixture was heated and decompressed at 300°C to 400°C under a mixed gas flow of dry air and nitrogen. At this time, if the stirring blades in the mixer are moved to make it easier to discharge the gas, the specific surface area tends to decrease. The end point of heating and stirring was determined to be the time when the current value of the stirring blades decreased and stabilized, using the phenomenon that the low-molecular-weight gas in the coal tar pitch volatilized and the viscosity of the mixture decreased, and secondary particles were obtained.

Next, the secondary particles were packed in a graphitization case and graphitized at 3100°C. After that, the obtained particles were sieved through a 300-mesh screen to obtain graphite particles.

When the volume-based particle size distribution of the graphite particles was measured, D10 was 9.0 $\mu$m, D50 was 16.0 $\mu$m and D90 was 24.9 $\mu$m. The results obtained by measuring the compressive load and springback rate of the obtained graphite particles are shown in Table 3.

Needle coke, which is petroleum-derived coke different from that in Example 1, was used as a raw material for graphite particles. Flat coke particles were obtained in the same manner as in Example 1. When the volume-based particle size distribution of the coke particles was measured, D10 was 8.2 $\mu$m, D50 was 13.2 $\mu$m and D90 was 20.8 $\mu$m. A thermal expansion coefficient after firing at 1400°C of the coke particles was $3.57 \times 10^{-6}$/°C.

Graphite particles were produced by using the obtained coke particles in the same manner as in Example 1. When the volume-based particle size distribution of the graphite particles was measured, D10 was 8.5 $\mu$m, D50 was 14.6 $\mu$m and D90 was 22.5 $\mu$m. The results obtained by measuring the compressive load and springback rate of the graphite particles are shown in Table 3.

[Example 3]

Using the coke particles obtained in Example 2, secondary particles were obtained in the same manner as in Example 1. Next, the obtained secondary particles were molded by a uniaxial press at room temperature to obtain a block-shaped molding. Next, the obtained molding was heat treated at 800°C to 850° C in a nitrogen atmosphere, and then graphitized at 2600°C to 3100°C to obtain a graphitized product. The obtained graphitized product was pulverized and the obtained particles were sieved through a 300-mesh screen to obtain graphite particles.

When the volume-based particle size distribution of the graphite particles was measured, D10 was 9.5 $\mu$m, D50 was 17.5 $\mu$m and D90 was 31.2 $\mu$m. The results obtained by measuring the compressive load and springback rate of the obtained graphite particles are shown in Table 3.

[Example 4]

Using the coke particles obtained in Example 1, graphite particles were obtained in the same manner as in Example 3.

When the volume-based particle size distribution of the graphite particles was measured, D10 was 10.0 $\mu$m, D50 was 18.4 $\mu$m and D90 was 33.1 $\mu$m. The results obtained by measuring the compressive load and springback rate of the obtained graphite particles are shown in Table 3.

[Example 5]

Needle coke, which is petroleum-derived coke different from that in Example 1, was used as a raw material for graphite particles. Flat coke particles were obtained in the same manner as in Example 1. When the volume-based particle size distribution of the coke particles was measured, D10 was 9.4 $\mu$m, D50 was 15.8 $\mu$m and D90 was 21.4 $\mu$m. A thermal expansion coefficient after firing at 1400°C of the coke particles was $3.90 \times 10^{-6}$/°C.

Graphite particles were produced by using the obtained coke particles in the same manner as in Example 1. When the volume-based particle size distribution of the graphite particles was measured, D10 was 9.6 $\mu$m, D50 was 16.1 $\mu$m and D90 was 23.4 $\mu$m. The results obtained by measuring the compressive load and springback rate of the graphite particles are shown in Table 3.

[Example 6]

Needle coke, which is petroleum-derived coke different from that in Example 1, was used as a raw material for graphite particles. Flat coke particles were obtained in the same manner as in Example 1. When the volume-based particle size distribution of the coke particles was measured, D10 was 6.4 $\mu$m, D50 was 12.5 $\mu$m and D90 was 18.0 $\mu$m. A thermal expansion coefficient after firing at 1400°C of the coke particles was $2.30 \times 10^{-6}$/°C.

Graphite particles were produced by using the coke particles obtained in Example 6, in the same manner as in Example 3.

When the volume-based particle size distribution of the graphite particles was measured, D10 was 11.4 $\mu$m, D50 was 19.2 $\mu$m and D90 was 33.1 $\mu$m. The results obtained by measuring the compressive load and springback rate of the graphite particles are shown in Table 3.

[Example 7]

Needle coke, which is petroleum-derived coke different from that in Example 1, was used as a raw material for graphite particles. Flat coke particles were obtained in the same manner as in Example 1. When the volume-based particle size distribution of the coke particles was measured, D10 was 7.3 $\mu$m, D50 was 13.9 $\mu$m and D90 was 25.2 $\mu$m. A thermal expansion coefficient after firing at 1400°C of the coke particles was $2.72 \times 10^{-6}$/°C.

Graphite particles were produced by using the coke particles obtained in Example 7, in the same manner as in Example 3.

When the volume-based particle size distribution of the graphite particles was measured, D10 was 8.8 $\mu$m, D50 was 18.8 $\mu$m and D90 was 36.4 $\mu$m. The results obtained by measuring the compressive load and springback rate of the graphite particles are shown in Table 3.

[Example 8]

Needle coke, which is the same as that in Example 7, was used as a raw material for graphite particles. Flat coke particles were obtained in the same manner as in Example 1. When the volume-based particle size distribution of the coke particles was measured, D10 was 3.3 $\mu$m, D50 was 10.4 $\mu$m and D90 was 22.3 $\mu$m.

The graphite particles were obtained in the same manner as in Example 3 except that 81% by mass of coke particles obtained in Example 8 as a raw material and 9% by mass of coal tar and 10% by mass of starch (degree of gelatinization: 95% or more) as a binder were used. When the volume-based particle size distribution of the graphite particles was measured, D10 was 5.5 $\mu$m, D50 was 12.5 $\mu$m and D90 was 21.4 $\mu$m. The results obtained by measuring the compressive load and springback rate of the graphite particles are shown in Table 3.

[Example 9]

Needle coke, which is the same as that in Example 7, was used as a raw material for graphite particles. Flat coke particles were obtained in the same manner as in Example 1. When the volume-based particle size distribution of the coke particles was measured, D10 was 5.1 $\mu$m, D50 was 10.1 $\mu$m and D90 was 17.7 $\mu$m.

The graphite particles were obtained in the same manner as in Example 3 except that 90% by mass of coke particles obtained in Example 9 as a raw material and 10% by mass of starch (degree of gelatinization: 95% or more) as a binder were used. When the volume-based particle size distribution of the graphite particles was measured, D10 was 6.4 $\mu$m, D50 was 14.0 $\mu$m and D90 was 29.6 $\mu$m. The results obtained by measuring the compressive load and springback rate of the graphite particles are shown in Table 3.

[Example 10]

Needle coke, which is petroleum-derived coke different from that in Example 1, was used as a raw material for graphite particles. Flat coke particles were obtained in the same manner as in Example 1. When the volume-based particle size distribution of the coke particles was measured, D10 was 8.8 $\mu$m, D50 was 13.9 $\mu$m and D90 was 19.0 $\mu$m. A thermal expansion coefficient after firing at 1400°C of the coke particles was 2.25 × 10$^{-6}$/°C.

85 parts by mass of the coke particles and 15 parts by mass of coal tar pitch (softening point: 100°C to 150°C, quinoline insoluble content: 15% by mass or less, fixed carbon: 55% to 75% by mass) were mixed at room temperature to obtain a mixture. Next, the graphite particles were obtained using the obtained mixture in the same manner as in Example 3. When the volume-based particle size distribution of the graphite particles was measured, D10 was 12.0 $\mu$m, D50 was 19.5 $\mu$m and D90 was 28.6 $\mu$m. The results obtained by measuring the compressive load and springback rate of the graphite particles are shown in Table 3.

[Comparative Examples 1 to 3]

A Spherical natural graphite with D10 of 15.1 $\mu$m, D50 of 22.0 $\mu$m, and D90 of 30.5 $\mu$m was used as the graphite particles of Comparative Example 1, and a spherical natural graphite with D10 of 2.3 $\mu$m, D50 of 4.0 $\mu$m, and D90 of 6.3 $\mu$m was used as the graphite particles of Comparative Example 2, and a spherical natural graphite with D10 of 8.2 $\mu$m, D50 of 10.5 $\mu$m, and D90 of 13.6 $\mu$m was used as the graphite particles of Comparative Example 3.

The results of measuring the compressive load and springback rate of the graphite particles by the method described above are shown in Table 3.

[Comparative Example 4]

Needle coke, which is petroleum-derived coke different from that in Example 1, was used as a raw material for graphite particles. Flat coke particles were obtained in the same manner as in Example 1. When the volume-based particle size distribution of the coke particles was measured, D10 was 8.8 $\mu$m, D50 was 13.9 $\mu$m and D90 was 19.0 $\mu$m. A thermal expansion coefficient after firing at 1400°C of the coke particles was 2.25 × 10$^{-6}$/°C.

85 parts by mass of the coke particles, 15 parts by mass of coal tar pitch (softening point: 100°C to 150°C, quinoline insoluble content: 15% by mass or less, fixed carbon: 55% to 75% by mass) and 6 parts by mass of silicon carbide as a graphitization catalyst were mixed at room temperature to obtain a mixture. Next, the graphite particles were obtained using the obtained mixture in the same manner as in Example 3.

When the volume-based particle size distribution of the graphite particles was measured, D10 was 11.4 $\mu$m, D50 was 19.7 $\mu$m and D90 was 30.3 $\mu$m. The results obtained by measuring the compressive load and springback rate of the graphite particles are shown in Table 3.

[Comparative Example 5]

85 parts by mass of the coke particles obtained in Comparative Example 4, 15 parts by mass of coal tar pitch (softening point: 100°C to 150°C, quinoline insoluble content: 15% by mass or less, fixed carbon: 55% to 75% by mass) and 12 parts by mass of silicon carbide as a graphitization catalyst were mixed at room temperature to obtain a mixture. Next, the graphite particles were obtained using the obtained mixture in the same manner as in Example 3.

When the volume-based particle size distribution of the graphite particles was measured, D10 was 11.0 $\mu$m, D50 was 19.9 $\mu$m and D90 was 31.7 $\mu$m. The results obtained by measuring the compressive load and springback rate of the graphite particles are shown in Table 3.

(Compressive Load)

A mold with a diameter of 15 mm was filled with 3.0 g of a negative electrode material, and compressed at a constant speed of 10 mm/min using an Autograph (manufactured by Shimadzu Corporation). During this compression, the distance from the bottom surface of the negative electrode material to the pressing surface was measured, and the density under pressure was calculated from the volume of the negative electrode material obtained by multiplying this distance by the bottom area of the mold. The applied pressure (kN/cm$^2$) when autograph's press hammer was equipped with a load cell and the specific density of 1.7 g/cm$^3$ was reached, was taken as the compressive load.

(Springback Rate)

The springback rate was determined by dividing the absolute value of the difference between the standard density of 1.7 g/cm$^3$ when pressed by the above method using Autograph (manufactured by Shimadzu Corporation) and the density of the negative electrode material after springback, by the density of 1.7 g/cm$^3$.

(Calculation of Liquid Absorption Time Index)

Using the results of the compressive load and springback rate of the graphite particles obtained in each of Examples and Comparative Examples, and the following regression formula, the calculated value of the liquid absorption time index of the negative electrode was determined. The results are shown in Table 3.

$$\text{Regression formula} \cdots (\text{Liquid absorption time index}) = 337.7 - 369 \times (\text{Springback rate}) - 48.4 \times (\text{Compressive load})$$

(Relationship between Liquid Absorption Time Index and Cycle Capacity Retention Rate)

<<Production of Lithium-Ion Secondary Battery >>

A coin cell was produced using the electrode obtained above as the negative electrode, metallic lithium as the counter electrode, a mixture of ethylene carbonate/ethyl methyl carbonate (3:7 volume ratio) and vinylene carbonate (VC) (1.0% by mass) containing 1M LiPF$_6$ as the electrolytic solution, a polyethylene microporous membrane with a thickness of 25 μm as a separator, and a copper plate with a thickness of 250 μm as a spacer.

«Evaluation of Battery Characteristics»

The cycle characteristics of the lithium-ion secondary battery produced as described above were evaluated as follows.
Specifically, the produced lithium-ion secondary battery was placed in a constant temperature bath maintained at 25°C, and after constant current charging at 4.6 mA until it reached 4.2 V, it was further charged at a constant voltage of 4.2 V until the current decayed to a value corresponding to 0.046 mA. After charging, the battery was rested for 10 minutes and then discharged at 4.6 mA to 2.75 V, and the initial discharge capacity was measured. This charging and discharging was repeated for an additional 299 cycles. At this time, the discharge capacity at the 100th cycle and the discharge capacity at the 300th cycle were measured.
The value obtained by dividing the discharge capacity after each cycle by the initial discharge capacity was multiplied by 100 to obtain the cycle capacity retention rate (%).
The results are shown in Table 3.
By comparing the capacity retention rate (%) after 100 cycles with the capacity retention rate (%) after 300 cycles, variation in the capacity retention rate when charging and discharging cycles were repeated were evaluated. Specifically, the variation rate (%) of the capacity retention rate from after 100 cycles to after 300 cycles was determined as shown in the following formula (3). An increase in the variation rate means that the cycle characteristics are significantly degraded due to repeated charge/discharge cycles.

$$\text{Variation rate (\%)} = [(\text{Capacity retention rate after 100 cycles} - \text{Capacity retention rate after 300 cycles})/\text{Capacity retention rate after 100 cycles}] \times 100 \cdots (3)$$

The results are shown in Table 3.

[Table 3]

| | Coke thermal expansion coefficient [×10⁻⁶/°C] | SiC in mixture (parts by mass) | D50 [μm] | Compressive load [kN/cm²] | Springback rate | Liquid absorption time index (calculated value) | [Springback rate × 7.6] + [Compressive load] | Capacity retention rate after 100 cycles (%) | Capacity retention rate after 300 cycles (%) | Variation rate (%) |
|---|---|---|---|---|---|---|---|---|---|---|
| Example 1 | 3.52 | 0 | 16.0 | 2.493 | 0.337 | 93 | 5.056 | 98.0 | 92.8 | 5.3 |
| Example 2 | 3.57 | 0 | 14.6 | 2.673 | 0.353 | 78 | 5.359 | 98.2 | 93.2 | 5.1 |
| Example 3 | 3.57 | 0 | 17.5 | 3.478 | 0.388 | 26 | 6.427 | 97.8 | 95.0 | 2.9 |
| Example 4 | 3.52 | 0 | 18.4 | 3.433 | 0.377 | 32 | 6.298 | 98.0 | 94.6 | 3.5 |
| Example 5 | 3.9 | 0 | 16.1 | 2.804 | 0.277 | 100 | 4.912 | 97.8 | 92.0 | 5.9 |
| Example 6 | 2.3 | 0 | 19.2 | 2.051 | 0.338 | 114 | 4.622 | 98.1 | 91.3 | 6.9 |
| Example 7 | 2.72 | 0 | 18.8 | 2.513 | 0.275 | 114 | 4.605 | 97.7 | 91.0 | 6.9 |
| Example 8 | 2.72 | 0 | 12.5 | 2.032 | 0.293 | 131 | 4.261 | 97.6 | 82.3 | 15.7 |
| Example 9 | 2.72 | 0 | 14.0 | 2.429 | 0.315 | 104 | 4.822 | 97.9 | 92.4 | 5.6 |
| Example 10 | 2.25 | 0 | 19.5 | 2.068 | 0.291 | 130 | 4.280 | 98.0 | 87.4 | 10.8 |
| Comparative Example 1 | - | 0 | 22.0 | 1.748 | 0.060 | 231 | 2.204 | 96.0 | 45.0 | 53.1 |
| Comparative Example 2 | - | 0 | 3.0 | 3.234 | 0.115 | 139 | 4.105 | 97.4 | 74.3 | 23.7 |
| Comparative Example 3 | - | 0 | 10.5 | 2.386 | 0.076 | 194 | 2.963 | 96.4 | 47.0 | 51.2 |
| Comparative Example 4 | 2.25 | 6 | 19.7 | 1.868 | 0.275 | 146 | 3.960 | 97.9 | 72.1 | 26.4 |
| Comparative Example 5 | 2.25 | 12 | 19.9 | 1.731 | 0.257 | 159 | 3.686 | 98.0 | 65.6 | 33.1 |

As shown in Table 3, each Example satisfied the condition of formula (1) shown below, and the result of the capacity retention rate, particularly the result of the capacity retention rate after 300 cycles, was better than that of each Comparative Example.

$$[\text{Springback rate} \times 7.6] + [\text{Compressive load (kN/cm}^2)] \geq 4.2 \cdots (1)$$

Furthermore, as shown in Table 3, it was confirmed that each Example had a smaller variation rate (%) of the capacity retention rate from 100 cycles to 300 cycles than each Comparative Example. As a result, it found that the liquid absorption time index became smaller, the value of the left side of the formula (1) became larger, or the like, whereby the decrease in the cycle capacity retention rate became gentle even when the charge/discharge cycle was repeated.

The disclosure of PCT/JP2021/003589 filed on February 1, 2021 is incorporated herein by reference in its entirety.

All documents, patent applications, and technical standards described in the present disclosure are herein incorporated by reference to the same extent as if each individual document, patent application, or technical standard was specifically and individually indicated to be incorporated by reference.

## Claims

1. A negative electrode material for a lithium-ion secondary battery comprising graphite particles satisfying the following Formula (1):

$$[\text{Springback rate} \times 7.6] + [\text{Compressive load (kN/cm}^2)] \geq 4.2 \cdots (1).$$

2. The negative electrode material for a lithium-ion secondary battery according to claim 1, wherein the compressive load of the graphite particles is 2.0 kN/cm$^2$ or more.

3. The negative electrode material for a lithium-ion secondary battery according to claim 1 or 2, wherein the springback rate of the graphite particles is 0.25 or more.

4. The negative electrode material for a lithium-ion secondary battery according to any one of claims 1 to 3, wherein the graphite particles comprises composite particles having a structure in which a plurality of flat graphite particles are stacked.

5. A method of evaluating a negative electrode material for a lithium-ion secondary battery comprising, evaluating a negative electrode material for a lithium-ion secondary battery using a regression formula obtained by multiple regression analysis with a springback rate of graphite particles included in the negative electrode material for a lithium-ion secondary battery and a compressive load (kN/cm$^2$) of the graphite particles as explanatory variables and a liquid absorption time of a negative electrode including the negative electrode material for a lithium-ion secondary battery as an objective variable.

6. A method of producing a negative electrode material for a lithium-ion secondary battery comprising producing a negative electrode material for a lithium-ion secondary battery based on an evaluation result of a negative electrode material for a lithium-ion secondary battery using the evaluation method of a negative electrode material for a lithium-ion secondary battery according to claim 5.

7. A method of producing a negative electrode material for a lithium-ion secondary battery comprising producing the negative electrode material for a lithium-ion secondary battery according to any one of claims 1 to 4, wherein the method comprises a step of graphitizing coke.

8. The method of producing a negative electrode material for a lithium-ion secondary battery according to claim 7, wherein the coke has a thermal expansion coefficient after firing at 1400°C of 2.30 $\times$ 10$^{-6}$/°C or more.

9. A negative electrode for a lithium-ion secondary battery, comprising:
   a negative electrode material layer comprising the negative electrode material for a lithium-ion secondary battery according to any one of claims 1 to 4, and a current collector.

10. A lithium-ion secondary battery, comprising: the negative electrode for a lithium-ion secondary battery according to claim 7, a positive electrode; and an electrolytic solution.

## INTERNATIONAL SEARCH REPORT

| | International application No. |
|---|---|
| | **PCT/JP2022/003834** |

### A. CLASSIFICATION OF SUBJECT MATTER

*H01M 4/133*(2010.01)i; *H01M 4/139*(2010.01)i; *H01M 4/587*(2010.01)i
FI: H01M4/133; H01M4/139; H01M4/587

According to International Patent Classification (IPC) or to both national classification and IPC

### B. FIELDS SEARCHED

Minimum documentation searched (classification system followed by classification symbols)

H01M4/133; H01M4/139; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-115418 A (CHUO DENKI KOGYO CO LTD) 23 June 2016 (2016-06-23) paragraphs [0036], [0039] | 1-10 |
| A | JP 6779859 B2 (ENVISION AESC ENERGY DEVICES LTD.) 04 November 2020 (2020-11-04) fig. 1-2, paragraphs [0013]-[0014] | 1-10 |
| A | JP 6029200 B2 (NIPPON CARBON CO LTD) 24 November 2016 (2016-11-24) paragraph [0024] | 1-10 |
| A | JP 2019-532469 A (IMERYS GRAPHITE & CARBON SWITZERLAND LTD) 07 November 2019 (2019-11-07) paragraphs [0004], [0132] | 1-10 |
| A | JP 2012-516826 A (TIMCAL S.A) 26 July 2012 (2012-07-26) paragraphs [0058]-[0064] | 1-10 |
| A | JP 2014-229517 A (HITACHI CHEMICAL CO LTD) 08 December 2014 (2014-12-08) paragraphs [0043], [0060] | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/003834**

| Patent document cited in search report | | | Publication date (day/month/year) | Patent family member(s) | | | Publication date (day/month/year) |
|---|---|---|---|---|---|---|---|
| JP | 2016-115418 | A | 23 June 2016 | (Family: none) | | | |
| JP | 6779859 | B2 | 04 November 2020 | US 2018/0083270 A1 fig. 1-2, paragraphs [0019]-[0020] WO 2016/148185 A1 EP 3273511 A1 CN 107431190 A | | | |
| JP | 6029200 | B2 | 24 November 2016 | (Family: none) | | | |
| JP | 2019-532469 | A | 07 November 2019 | US 2019/0237755 A1 paragraphs [0004], [0206] WO 2018/046767 A1 EP 3510656 A1 CN 109690837 A KR 10-2019-0049812 A | | | |
| JP | 2012-516826 | A | 26 July 2012 | US 2012/0077035 A1 paragraphs [0060]-[0066] WO 2010/089326 A1 EP 2393753 A1 KR 10-2011-0118153 A CN 102300807 A | | | |
| JP | 2014-229517 | A | 08 December 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015147012 A
- JP 2005302725 A

- JP 2021003589 W